# EUROPÄISCHE PATENTSCHRIFT

(11) **EP 2 847 509 B1**
(45) Veröffentlichungstag und Bekanntmachung des Hinweises auf die Patenterteilung: **10.08.2016**
(21) Anmeldenummer: 13728669.6
(22) Anmeldetag: 30.04.2013
(51) Int. Cl.: F21S 8/10, F21V 8/00, G02B 19/00, F21V 5/00

(54) **BELEUCHTUNGSEINRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR PROJECTEUR DE VÉHICULE À MOTEUR

(30) Priorität: 09.05.2012 AT 501652012
(43) Veröffentlichungstag der Anmeldung: 18.03.2015
(60) Teilanmeldung: 15194501.1
(73) Patentinhaber: Zizala Lichtsysteme GmbH, 3250 Wieselburg (AT)
(72) Erfinder: KRENN, Irmgard, A-3251 Purgstall/Erlauf (AT); PLANK, Josef, A-3251 Purgstall/Erlauf (AT)
(74) Vertreter: Patentanwaltskanzlei Matschnig & Forsthuber OG
(86) Internationale Anmeldenummer: PCT/AT2013/050100
(87) Internationale Veröffentlichungsnummer: WO 2013/166535

(56) Entgegenhaltungen:
- EP-A1- 1 396 753
- EP-A1- 1 396 754
- EP-A2- 1 842 723
- EP-A2- 2 306 077
- WO-A1-03/048637
- WO-A2-2010/019594
- AT-A4- 507 679
- DE-A1-102004 033 758
- DE-A1-102005 013 950
- DE-A1-102006 002 322
- US-A1- 2008 253 144
- US-A1- 2009 016 074
- US-A1- 2009 129 079

## Beschreibung

Die Erfindung betrifft eine Beleuchtungseinrichtung für einen Kraftfahrzeugscheinwerfer, umfassend eine Anzahl an Lichtquellen, zumindest eine Vorsatzoptik, mit einer Lichteintrittsfläche und einer Lichtaustrittsfläche, wobei die zumindest eine Vorsatzoptik mehrere Lichtleitkörper umfasst, und wobei jeder Lichtleitkörper eine Lichteintrittsfläche aufweist, in welche jeweils zumindest eine Lichtquelle Licht einspeist, und wobei die Lichtleitkörper in die gemeinsame Lichtaustrittsfläche münden.

Weiters betrifft die Erfindung ein Lichtmodul, welches aus einer oben genannten Beleuchtungseinrichtung besteht bzw. zumindest eine solche Beleuchtungseinrichtung umfasst. Außerdem betrifft die Erfindung auch noch einen Kraftfahrzeugscheinwerfer umfassend zumindest eine der oben genannten Beleuchtungseinrichtungen bzw. umfassend zumindest ein Lichtmodul, welches zumindest eine der oben genannten Beleuchtungseinrichtungen umfasst.

Oben genannte Beleuchtungseinrichtungen werden im Zusammenhang mit Lichtmodulen bzw. Kraftfahrzeugscheinwerfern dazu verwendet, um Lichtverteilungen zu erzeugen. Üblicherweise werden Vorsatzoptiken aus Glas verwendet, mit welchen sich einfache Geometrien für Vorsatzoptiken realisieren lassen. Sind hingegen komplexere Geometrien für eine Vorsatzoptik notwendig, so ist hierfür die Verwendung von Glas häufig ungeeignet.

US 2009/0016074 A1 offenbart eine gattungsgemäße Beleuchtungseinrichtung mit einer Anzahl an Lichtquellen und einer entsprechenden Anzahl an Lichtleitkörper, welche eine Vorsatzoptik bilden.

Es hat sich herausgestellt, dass anstelle von Glas für die Herstellung von komplexen Geometrien als Material transparente, insbesondere hochtransparente, lichtleitende und formbare Kunststoffe gut geeignet sind. Besonders gut geeignet sind zur Herstellung von komplexen Vorsatzoptiken Poly(organo)siloxane, von besonderem Vorteil ist es, wenn die zumindest eine Vorsatzoptik aus einem Silikonmaterial hergestellt ist.

Nachteilig an der Verwendung solcher Kunststoffe, insbesondere von Silikon zur Herstellung von Vorsatzoptiken ist allerdings, dass eine solche Vorsatzoptik nicht über die Festigkeit wie ein Glaskörper verfügt. Unter optischen Gesichtspunkten ist es allerdings vorteilhaft bzw. notwendig, dass die Vorsatzoptik insbesondere in Hinblick auf die Positionierung ihrer Lichteintrittsfläche bzw. ihrer Lichteintrittsflächen in Bezug auf die Lichtquellen eine möglichst stabile Gestalt aufweist. Ein Versatz der Lichteintrittsflächen in Bezug auf die Lichtquellen, insbesondere bei der Verwendung von Leuchtdioden als Lichtquellen, führt beispielsweise zu unerwünschten Lichtverlusten.

Ein Versatz der Lichtaustrittsfläche der Vorsatzoptik wiederum kann dazu führen, dass das abgebildete Lichtbild nicht den gewünschten Anforderungen entspricht.

Es ist eine Aufgabe der Erfindung, eine Beleuchtungseinrichtung mit einer Vorsatzoptik zu schaffen, bei welcher die oben angesprochenen Probleme behoben sind.

Diese Aufgabe wird mit einer Beleuchtungsvorrichtung nach Anspruch 1 gelöst.

Zumindest ein, vorzugsweise genau ein Positionshalter ist vorgesehen, mittels welchem die Lichteintrittsflächen der Lichtleitkörper der zumindest einen Vorsatzoptik in Bezug auf die Lichtquellen in Position gehalten sind.

Durch einen solchen Positionshalter können die Lichtleitkörper bzw. deren Lichteintrittsflächen exakt in Bezug auf die Lichtaustrittsflächen der Lichtquellen positioniert werden, so dass die Lichtverluste, die bei einer ungenauen Positionierung auftreten würden, minimiert werden können. Ein Schwingen der Vorsatzoptik - welches vor allem im Fahrbetrieb durch Vibrationen des Fahrzeuges auftreten kann -, insbesondere der Lichtleitkörper und somit der Lichteintrittsflächen in y- und z-Richtung kann somit verhindert werden. Die y- und die z-Richtung stehen dabei normal aufeinander und liegen im Wesentlichen in der Ebene der Lichteintrittsfläche der Vorsatzoptik, während die x-Richtung normal auf die von y und z aufgespannte Ebene steht.

Zusätzlich hat ein solcher Positionshalter noch den Effekt, vorausgesetzt, dass er aus einem geeigneten Material gebildet ist, wie es weiter unten noch näher erörtert wird, dass das von den LEDs/Lichtquellen, z.B. Leuchtdioden austretende Streulicht von dem Positionshalter abgeschottet wird.

Vorzugsweise ist die Lichtaustrittsfläche der zumindest einen Vorsatzoptik zur Formstabilisierung der zumindest einen Vorsatzoptik mit einer transparenten Lichtscheibe versehen.

Durch eine solche feste bzw. starre Lichtscheibe kann die Vorsatzoptik im Bereich ihrer Lichtaustrittsfläche stabilisiert werden, so dass ansonsten auftretende nachteilige optische Effekte verhindert werden können.

Bei der Lichtaustrittsfläche der Vorsatzoptik besteht weniger das Problem eines Schwingens in y- und z-Richtung, vielmehr besteht die Gefahr, dass insbesondere der mittlere Bereich der Lichtaustrittsfläche in x-Richtung zu schwingen beginnen kann. Durch die Lichtscheibe kann dieses Schwingen ebenfalls verhindert werden.

Von besonderem Vorteil ist es natürlich, wenn die beiden oben genannten Maßnahmen, also dass zumindest ein, vorzugsweise genau ein Positionshalter vorgesehen ist, mittels welchem die Lichteintrittsflächen der Lichtleitkörper in Bezug auf die Lichtquellen in Position gehalten sind, und dass weiters die Lichtaustrittsfläche der Vorsatzoptik zur Formstabilisierung der Vorsatzoptik mit einer transparenten, insbesondere einer hochtransparenten Lichtscheibe versehen ist, bei einer erfindungsgemäßen Beleuchtungseinrichtung gemeinsam realisiert sind.

Von besonderem Vorteil ist es, wenn die Lichtaustrittsfläche der Vorsatzoptik mit der transparenten Lichtscheibe umspritzt ist.

Beispielsweise erfolgt dieses Umspritzen mittels eines 2-Komponenten-Spritzgußverfahrens.

In Hinblick auf eine hohe Stabilität der Vorsatzoptik ist es von Vorteil, wenn die Lichtaustrittsfläche mit der transparenten Lichtscheibe vollflächig umspritzt ist.

Durch das Umspritzen mit der Lichtscheibe entfällt - im Vergleich zur Verwendung einer vorgefertigten Scheibe - ein nachfolgender Montageschritt. Außerdem entsteht kein Luftspalt zwischen Lichtscheibe und Lichtaustrittsfläche der Vorsatzoptik, welcher zusätzliche unerwünschte Lichtbrechungen verursachen könnte.

Von besonderem Vorteil ist es, wenn die Lichtaustrittsfläche aus einem Kunststoff, vorzugsweise aus einem Thermoplast, insbesondere vorzugsweise aus einem temperaturbeständigen Thermoplast, insbesondere PC ("Polycarbonat"), gefertigt ist. Die Lichtscheibe sollte dabei bis zumindest ca. 150°C temperaturbeständig sein.

Es kann aber auch vorgesehen sein, dass die Lichtscheibe vorgefertigt wird und anschließend auf der Vorsatzoptik angebracht, beispielsweise mechanisch befestigt wird. Bei Verwendung einer vorgefertigten Lichtscheibe kann es insbesondere von Vorteil sein, wenn diese mittels eines optisch transparenten Klebers mit der Lichtaustrittsfläche der Vorsatzoptik verklebt wird, sodass ein Luftspalt vermieden werden kann.

Von Vorteil ist es weiters, wenn der Positionshalter aus einem Kunststoff, insbesondere einem Thermoplast gefertigt ist. Thermoplast ist etwa im Vergleich zu Duroplasten besser formbar.

Besonders vorteilhaft ist es dabei, wenn der Positionshalter aus einem Streulicht abschattenden Material, also einem lichtundurchlässigen Material, z.B. aus schwarzem Kunststoff, insbesondere - beispielsweise schwarzem - Thermoplast gefertigt ist, sodass Streulicht insbesondere von benachbarten Lichtquellen, insbesondere Leuchtdioden abgeschottet wird. Eine weitere, alternative oder verzugsweise zusätzliche Maßnahme, um Lichtverluste in den Positionshalter hinein zu vermeiden ist jene, dass der Positionshalter derart ausgebildet ist, dass die Kontaktfläche eines Lichtleitkörpers (bzw. der Lichtleitkörper) mit dem Positionshalter möglichst gering ist.

Der Lichtleitkörper kontaktiert den Positionshalter somit nur in einem schmalen Kontaktbereich, beispielsweise in einer um den jeweiligen Lichtleiter umlaufenden Linie.

Erfindungsgemäß können die einzelnen Lichtleitkörper in ihrer Position in Bezug auf die Lichtquellen gehalten werden, wenn der Positionshalter für jeden Lichtleitkörper eine Aufnahme aufweist, in welcher der zugeordnete Lichtleitkörper passgenau aufgenommen und positioniert ist.

Bei den Aufnahmen handelt es sich um Löcher bzw. Öffnungen in dem Positionshalter, mit genau angepasstem Querschnitt für den jeweiligen Lichtleitkörper; diese werden in die zugeordneten Aufnahmen eingesteckt und von diesem Positionshalter in der gewünschten Position gehalten.

Da insbesondere die genaue Positionierung der Lichteintrittsflächen von Bedeutung ist, ist es zweckmäßig, wenn der Positionshalter die Lichtleitkörper an ihren den Lichteintrittsflächen zugewandten Endbereichen aufnimmt.

Die Lichtleitkörper können dabei geringfügig nach hinten aus der Aufnahme herausragen oder bündig mit dem Positionshalter abschließen.

Weiters kann auch noch vorgesehen sein, dass in den Aufnahmen, zwischen dem Positionshalter und den Lichtleitkörpern jeweils ein Material eingefügt ist, welches einen geringeren Brechungsindex als das Material der Lichtleitkörper aufweist.

Insbesondere ist es von Vorteil, wenn das Material mit geringerem Brechungsindex den Lichtleitkörper derart umgibt, dass dieser den Positionshalter nicht berührt.

Dadurch wird der Grenzwinkel für Totalreflexion erhöht, so dass keine oder nur geringe Mengen an Licht aus dem Lichtleitkörper austreten.

Bei einer konkreten Ausführungsform ist vorgesehen, dass die Lichtleitkörper länglich ausgebildet sind, mit einer größeren Ausdehnung in Ausbreitungsrichtung des Lichtes als quer dazu.

Vorzugsweise ist außerdem vorgesehen, dass jede Lichtquelle jeweils eine oder mehrere Leuchtdioden umfasst. Vorzugsweise ist jede Lichtquelle separat ansteuerbar und entsprechend ein- und ausschaltbar, vorzugsweise auch dimmbar. Besteht eine Lichtquelle aus mehreren Leuchtdioden, kann es auch noch von Vorteil sein, wenn jede der Leuchtdioden separat ansteuerbar ist.

Die die Lichtleitkörper weisen einen zu ihren Lichteintrittsflächen hin sich verjüngenden Querschnitt auf.

Durch die sich somit in Lichtausbreitungsrichtung vergrößernden Querschnitte der Lichtleitkörper kann der Positionshalter nur bis zu einer gewissen Stelle an den Lichtleitkörpern aufgeschoben werden, wo er dann beispielsweise klemmend fixiert ist. Alternativ oder zusätzlich zu der klemmenden Positionierung kann der Positionshalter auch mit einem oben bereits erwähnten Halter für die Vorsatzoptik, mit welchem Halter die Vorsatzoptik (zusammen mit der Lichtscheibe und dem Positionshalter) beispielsweise in einem Lichtmodul oder in einem Fahrzeugscheinwerfer befestigt wird, in der gewünschten Position fixiert bzw. gehalten werden.

Beispielsweise kann vorgesehen sein, dass die Lichtleitkörper kegelstumpfförmig oder trapezförmig ausgebildet sind.

Im Prinzip kommen alle mehrseitigen Pyramidenstümpfe in Frage, z.B. 6-eckige, etwa in der Form wie keilförmige Bienenwaben. Die Grundflächenform steht eng im Zusammenhang mit den LED-Chip-Anordnungen und dem gewünschten Lichtein- und austritt.

Wie eingangs schon erwähnt, ist die zumindest eine Vorsatzoptik aus einem transparenten, insbesondere hochtransparenten, lichtleitenden und formbaren Kunststoff gefertigt. Beispielsweise kann die zumindest eine Vorsatzoptik aus einem Poly(organo)siloxan hergestellt werden.

Insbesondere von Vorteil ist es, wenn die zumindest eine Vorsatzoptik aus einem Silikonmaterial hergestellt ist.

Im Folgenden ist die Erfindung anhand der Zeichnung näher erörtert. In der Zeichnung zeigt
Fig. 1 eine erfindungsgemäße Beleuchtungseinrichtung in einer Explosionsdarstellung,
Fig. 2 eine perspektivische Darstellung der erfindungsgemäßen, zusammengebauten Beleuchtungseinrichtungen aus Figur 1 in einer Ansicht von schräg hinten,
Fig. 3 eine Vorsatzoptik aus Silikon mit einer Anzahl an Lichtleitkörpern,
Fig. 4 einen Positionshalter nach der Erfindung für die Lichtleitkörper einer Vorsatzoptik wie in Figur 3 dargestellt,
Fig. 5 einen Horizontalschnitt durch eine erfindungsgemäße Beleuchtungseinrichtung entlang der Ebene B-B in Figur 2, und
Fig. 6 einen Vertikalschnitt durch eine Beleuchtungseinrichtung aus Figur 2 entlang der Ebene A-A.

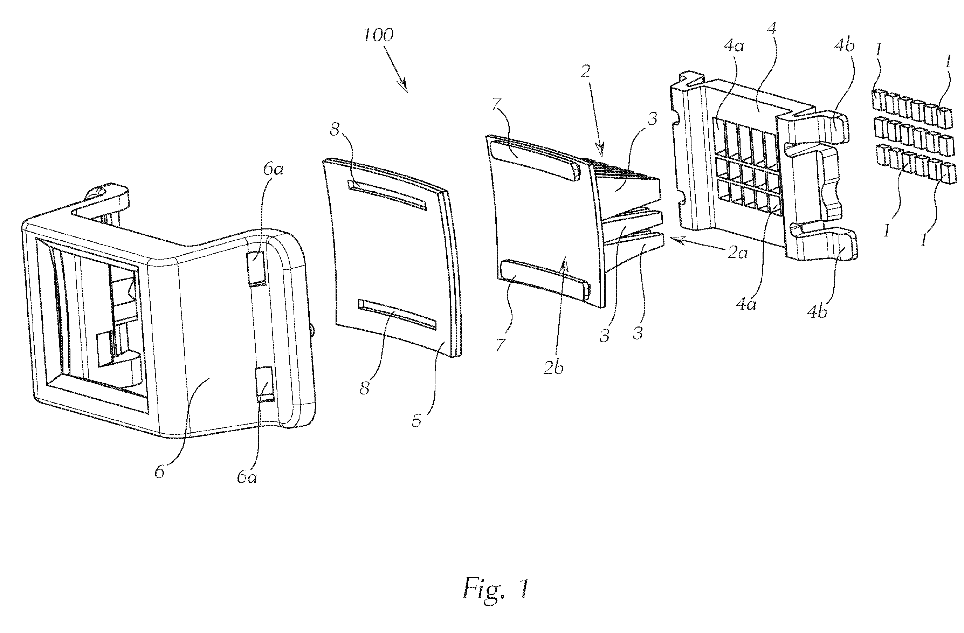

Figur 1 zeigt eine erfindungsgemäße Beleuchtungseinrichtung 100 für einen Kraftfahrzeugscheinwerfer in einer explodierten Darstellung. Die Beleuchtungseinrichtung 100 umfasst dabei eine Anzahl an Lichtquellen 1, wobei bei einer konkreten Ausführungsform jede Lichtquelle aus einer oder mehreren Leuchtdioden besteht.

Weiters umfasst die Beleuchtungseinrichtung 100 eine Vorsatzoptik 2, welche aus einem oben erwähnten Kunststoff, insbesondere aus einem Silikonmaterial gebildet ist. Die Vorsatzoptik 2 weist eine Lichteintrittsfläche 2a und eine Lichtaustrittsfläche 2b auf.

Wie weiters zu erkennen ist, umfasst die Vorsatzoptik 2 mehrere Lichtleitkörper 3, wobei jeder Lichtleitkörper 3 eine Lichteintrittsfläche 3a aufweist, in welche jeweils zumindest eine, vorzugsweise jeweils genau eine Lichtquelle 1 Licht einspeist. Zwischen den Lichtquellen (bzw. deren Lichtaustrittsflächen) und den Lichteintrittsflächen 3a besteht ein schmaler Spalt.

Die Lichteintrittsflächen 3a der einzelnen Lichtleitkörper 3 bilden somit die Lichteintrittsfläche 2a der Vorsatzoptik 2, die Lichteintrittsfläche 2a der Vorsatzoptik 2 besteht also aus einer Anzahl an Einzelflächen 3a.

Die Lichtleitkörper 3 münden in die gemeinsame Lichtaustrittsfläche 2b, über welche das eingespeiste Licht aus der Vorsatzoptik 2 wieder austritt und als Lichtverteilung in einem Bereich vor einem Fahrzeug abgebildet wird (bezogen auf die Situation, in welcher die Beleuchtungseinrichtung in ein Fahrzeug eingebaut ist). Die Abbildung wird dabei in der Regel durch eine Sekundäroptik, etwa eine Linse, durch welche das aus der Vorsatzoptik austretende Licht durchtritt, erzeugt.

Das eingespeiste Licht pflanzt sich dabei in den Lichtleitkörpern mittels Totalreflexion fort.

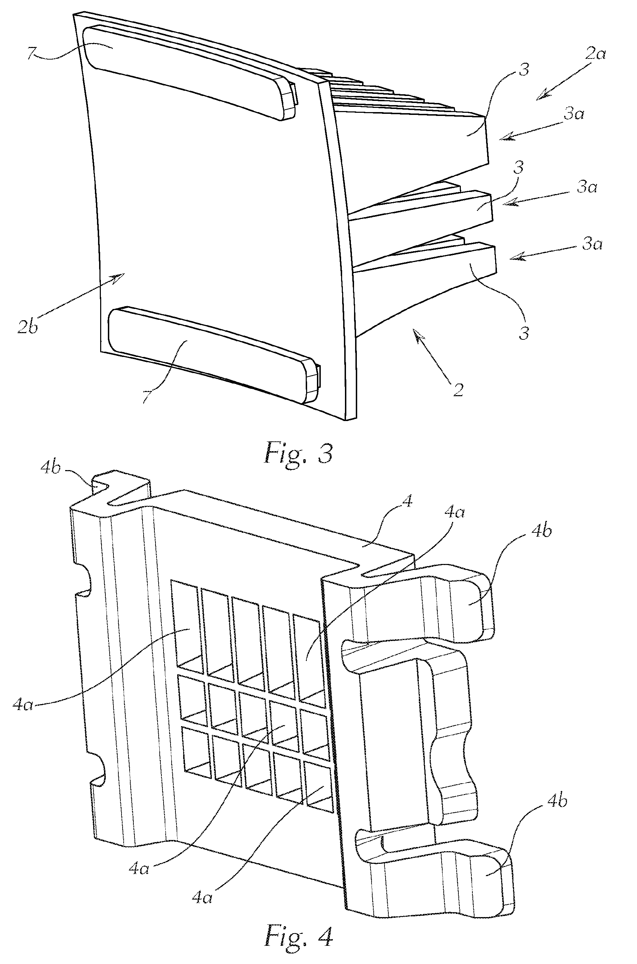

Eine Vorsatzoptik 2 ist in Figur 3 nochmals in einer größeren Darstellung gezeigt, dabei ist zu erkennen, dass bei der gezeigten Variante die obere Reihe an Lichtleitkörpern 3 in vertikaler Richtung eine größere Ausdehnung aufweisen als die Lichtleitkörper 3 in den unteren beiden Reihen. Dies soll aber lediglich zum Ausdruck bringen, dass die Lichtleitkörper prinzipiell alle dieselbe Gestalt aber auch beliebige unterschiedliche Ausgestaltungen, je nach gewünschter Lichtverteilung etc. aufweisen können.

Figur 1 zeigt weiters einen Positionshalter 4, mittels welchem die Lichteintrittsflächen 3a der Lichtleitkörper 3 der Vorsatzoptik 3 in Bezug auf die Lichtquellen 1 in Position gehalten sind.

Wie in Figur 1 und besonders in Figur 4 gut zu erkennen ist, weist dazu der Positionshalter 4 bei der gezeigten Ausführungsform für jeden Lichtleitkörper 3 eine Aufnahme 4a auf, in welcher der zugeordnete Lichtleitkörper 3 passgenau aufgenommen und positioniert ist.

Bei den Aufnahmen handelt es sich um Löcher bzw. Öffnungen in dem Positionshalter 4, mit genau angepasstem Querschnitt für den jeweiligen Lichtleitkörper 3; die Lichtleitkörper 3 werden in die zugeordneten Aufnahmen 4a eingesteckt und so von dem Positionshalter in der gewünschten Position gehalten.

Die Lichtleitkörper 3 sind bei der gezeigten Variante länglich ausgebildet, mit einer größeren Ausdehnung in Ausbreitungsrichtung des Lichtes als quer dazu. Außerdem weisen die Lichtleitkörper 3 einen zu ihren Lichteintrittsflächen 3a hin sich verjüngenden Querschnitt auf. Beispielsweise kann vorgesehen sein, dass die Lichtleitkörper 3 kegelstumpfförmig oder wie in den Figuren gezeigt trapezförmig ausgebildet sind.

Durch die sich somit in Lichtausbreitungsrichtung vergrößernden Querschnitte der Lichtleitkörper 3 kann der Positionshalter 4 nur bis zu einer gewissen Stelle an den Lichtleitkörpern 3 aufgeschoben werden, wo er dann beispielsweise klemmend fixiert ist.

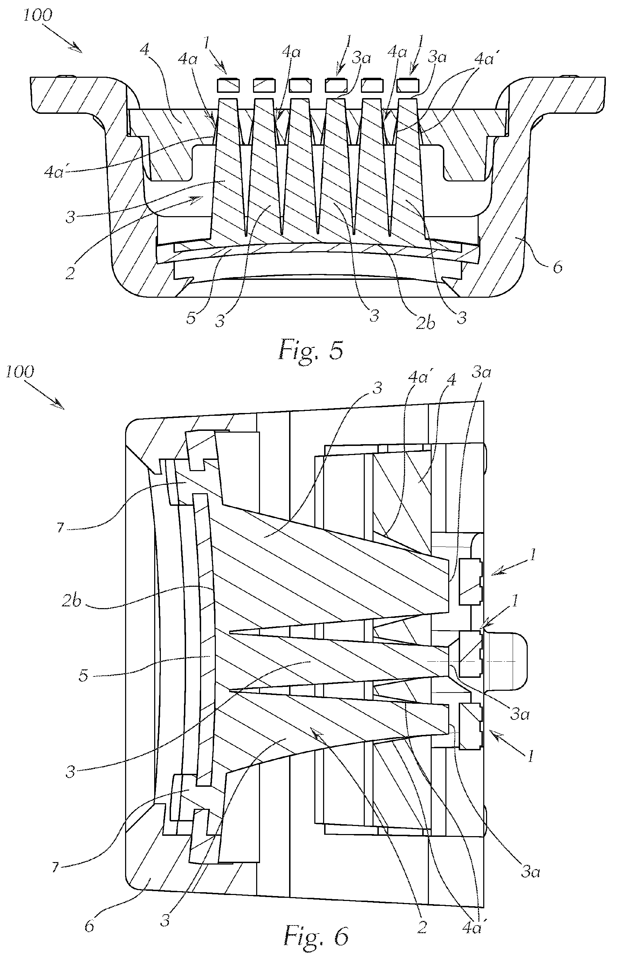

Diese Situation ist in den Figuren 5 und 6 gut zu erkennen, welche die erfindungsgemäße Beleuchtungseinrichtung 100 in zusammengebautem Zustand zeigen.

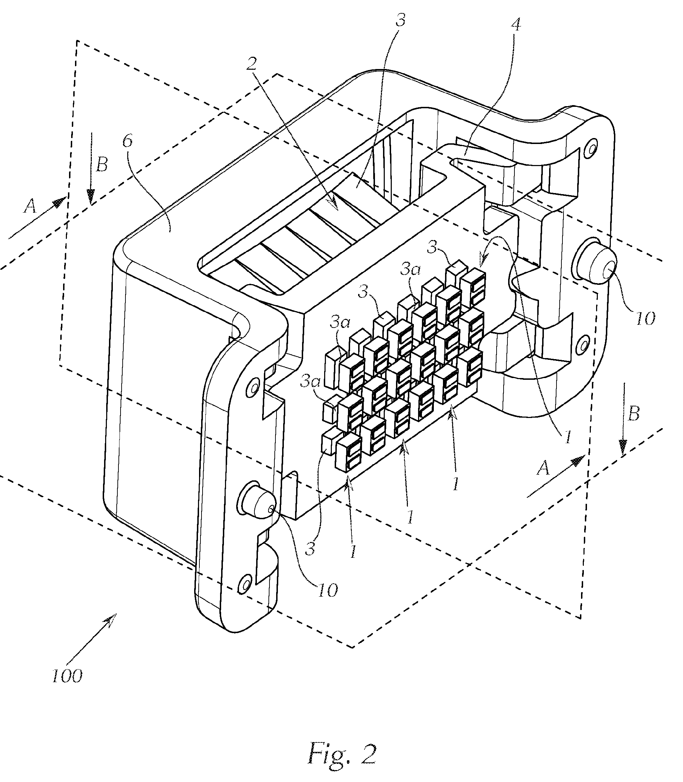

Wie in den Figuren 1, 5 und 6 sowie weiters in Figur 2 gut zu erkennen, welche die Beleuchtungsvorrichtung in einer perspektivischen Darstellung in zusammengebautem Zustand zeigt, ist außerdem ein Halter 6 für die Vorsatzoptik vorgesehen, mittels welchem Halter 6 die Vorsatzoptik 2 (zusammen mit einer Lichtscheibe 5 und dem Positionshalter 4) beispielsweise in einem Lichtmodul oder in einem Fahrzeugscheinwerfer befestigt wird.

Mit diesem Halter 6 wird außerdem der Positionshalter 4 auf den Lichtleitkörpern 3 der Vorsatzoptik 2 gehalten derart, dass der Positionshalter 4 nicht von den Lichtleitkörpern 3 herunterrutschen kann. Dazu sind entsprechende Anschläge 4b an dem Positionshalter 4 vorgesehen, mit welchen der Positionshalter 4 in entsprechend angepassten Ausnehmungen 6a in dem Halter 6 (siehe Figur 1, Figur 4) anschlägt und so gegen ein Bewegen entgegen der Lichtaustrittsrichtung gesichert, und so in der gewünschten Position fixiert bzw. gehalten ist. Der Positionshalter 4 ist vorteilhafterweise aus einem Kunststoff, insbesondere einem Thermoplast gefertigt. Besonders vorteilhaft ist es dabei, wenn der Positionshalter 4 aus einem schwarzen Kunststoff, insbesondere schwarzen Thermoplast gefertigt ist.

Eine Maßnahme, um Lichtverluste in den Positionshalter hinein zu vermeiden ist jene, dass der Positionshalter 4 derart ausgebildet ist, dass die Kontaktfläche eines Lichtleitkörpers 3 (bzw. der Lichtleitkörper) mit dem Positionshalter 4 möglichst gering ist. Dazu ist erfindungsgemäß vorgesehen, wie dies in den Figuren 5 und 6 gut zu erkennen ist, dass die Aufnahmen 4a nach hinten hin einen sich verjüngenden Querschnitt aufweisen, wobei sich dieser Querschnitt stärker verengt als jener der Lichtleitkörper 3. Die Begrenzungswände 4a' der Aufnahmen 4a laufen daher stärker zusammen als dies bei den Lichtleitkörpern 3 der Fall ist, wie dies in Figur 5 und 6 gut zu erkennen ist, sodass die Lichtleitkörper 3 die Begrenzungswände 4a' nur in einem schmalen Bereich, quasi entlang einer Linie kontaktieren.

Da insbesondere die genaue Positionierung der Lichteintrittsflächen von Bedeutung ist, nehmen die Aufnahmen 4a des Positionshalters 4 die Lichtleitkörper 3 vorzugsweise, wie dargestellt, an ihren den Lichteintrittsflächen 3a zugewandten Endbereichen auf, wobei die Lichtleitkörper 3 beispielsweise wie gezeigt geringfügig nach hinten aus den Aufnahmen 4a herausragen.

Durch einen Positionshalter 4 können also, wie erläutert, die Lichtleitkörper bzw. deren Lichteintrittsflächen exakt in Bezug auf die Lichtaustrittsflächen der Lichtquellen positioniert werden, so dass die Lichtverluste, die bei einer ungenauen Positionierung auftreten würden, minimiert werden können.

Zusätzlich hat ein solcher Positionshalter noch den Effekt, vorausgesetzt, dass er aus einem geeigneten Material gebildet ist, wie z.B. aus einem schwarzen Thermoplast, dass das von den Lichtquellen, z.B. Leuchtdioden austretende Streulicht von dem Positionshalter abgefangen wird.

Noch einmal auf Figur 1 zurückkommend ist bei der gezeigten Beleuchtungseinrichtung 100 weiters auch noch vorgesehen, dass die Lichtaustrittsfläche 2b der Vorsatzoptik 2 aus Silikon zur Formstabilisierung mit einer transparenten Lichtscheibe 5 versehen ist.

Durch eine solche feste bzw. starre Lichtscheibe kann die Vorsatzoptik im Bereich ihrer Lichtaustrittsfläche stabilisiert werden, so dass ansonsten auftretende nachteilige optische Effekte verhindert werden können.

Von besonderem Vorteil ist es, wenn die Lichtaustrittsfläche 2b der Vorsatzoptik 2 mit der transparenten Lichtscheibe 5 umspritzt ist. Beispielsweise erfolgt dieses Umspritzen mittels eines 2-Komponenten-Spritzgußverfahrens.

In Hinblick auf eine hohe Stabilität der Vorsatzoptik ist es von Vorteil, wenn die Lichtaustrittsfläche 2b mit der transparenten Lichtscheibe 5 vollflächig umspritzt ist.

Bei der Fertigung wird dabei zuerst die Vorsatzoptik 2 gefertigt, wobei sich durch das verwendete Werkzeug Stege 7 ausbilden. In einem zweiten Schritt wird die Lichtscheibe 5 gespritzt, welche dann an der Vorsatzoptik 3unmittelbar anliegt, durch das Hinterspritzen der Stege 7 hält die Lichtscheibe 5 an der Vorsatzoptik 2. In der Darstellung nach Figur 1 weist dabei die Lichtscheibe 5 schlitzförmige Öffnungen 8 auf - dies ist allerdings nur eine fiktive Darstellung für den Fall, dass sich die Lichtscheibe 5 zerstörungsfrei von der Vorsatzoptik 2 trennen lassen würde. In der Realität wird die Lichtscheibe 5 ja direkt auf die Vorsatzoptik aufgespritzt, sodass eine zerstörungsfreie Trennung wie in Figur 1 dargestellt nicht möglich ist.

Entgegen der Darstellung in den Figuren wäre es bei einer weiteren Variante auch noch möglich, dass der Halter 6 auf den Teil bestehend aus Vorsatzoptik und Lichtscheibe aufgespritzt wird.

Von besonderem Vorteil ist es, wenn die Lichtaustrittsfläche aus einem Kunststoff, vorzugsweise aus einem Thermoplast, insbesondere vorzugsweise aus einem temperaturbeständigen Thermoplast, insbesondere PC, gefertigt ist.

Die Lichtscheibe kann aber auch in dem Halter 6 für die Vorsatzoptik 2 befestigt, beispielsweise eingeclipst oder auf andere aus dem Stand der Technik bekannte Art und Weise befestigt werden und wird derart vor der Lichtaustrittsfläche der Vorsatzoptik in Position gehalten.

Mit einer erfindungsgemäßen Beleuchtungseinrichtung kann beispielsweise ein Abblendlicht oder ein Fernlicht erzeugt werden, wozu beispielsweise der linke Scheinwerfer und der rechte Scheinwerfer jeder eine erfindungsgemäße Beleuchtungseinrichtungen umfassen, mit welcher jeweils der linke bzw. rechte Teil der Lichtverteilung erzeugt werden. In Lichtaustrittsrichtung vor dem Halter 6 ist dabei jeweils noch eine Sekundäroptik, in der Regel eine Linse (nicht dargestellt) vorgesehen, mittels welche die jeweilige Lichtverteilung erzeugt wird.

Die erfindungsgemäße Beleuchtungseinrichtung kann aber auch für eine Rückfahrleuchte verwendet werden.

Figur 2 zeigt abschließend noch einmal die erfindungsgemäße Beleuchtungsvorrichtung 100 in zusammengebautem Zustand. Vorsatzoptik 2, Positionshalter 4, Lichtscheibe 5 und Halter 6 bilden dabei eine Einheit, wobei die Vorsatzoptik 2 über den Positionshalter 4 und die Lichtscheibe 5 mit dem Halter 6 verbunden sind. Die Lichtquellen 1 sind getrennt von dieser Einheit im Scheinwerfer verbaut, ebenso wie die nicht dargestellte Linse. Der Halter 6 ist mit dem Scheinwerfer über geeignete Befestigungselemente verbunden und sitzt beispielsweise auf einem eigenen Träger.

Mit geeigneten Befestigungselementen 10, etwa in Form von Zapfen oder Stiften, wird der Halter 6 dabei positionsrichtig im Scheinwerfergehäuse bezüglich der Lichtquellen befestigt, die Lichtquellen selbst sind auf einem nicht dargestellten Kühlkörper angebracht.

## Patentansprüche

1. Beleuchtungseinrichtung (100) für einen Kraftfahrzeugscheinwerfer, umfassend
• eine Anzahl an Lichtquellen (1),
• zumindest eine Vorsatzoptik (2), mit einer Lichteintrittsfläche (2a) und einer Lichtaustrittsfläche (2b),
• wobei die zumindest eine Vorsatzoptik (2) mehrere Lichtleitkörper (3) umfasst, und wobei jeder Lichtleitkörper (3) eine Lichteintrittsfläche (3a) aufweist, in welche jeweils zumindest eine Lichtquelle (1) Licht einspeist,
• und wobei die Lichtleitkörper (3) in die gemeinsame Lichtaustrittsfläche (2b) münden, und wobei zumindest ein, vorzugsweise genau ein Positionshalter (4) vorgesehen ist, mittels welchem die Lichteintrittsflächen (3a) der Lichtleitkörper (3) der zumindest einen Vorsatzoptik (2) in Bezug auf die Lichtquellen (1) in Position gehalten sind, und wobei der Positionshalter (4) für jeden Lichtleitkörper (3) eine Aufnahme (4a) aufweist, in welcher der zugeordnete Lichtleitkörper (3) passgenau aufgenommen und positioniert ist **dadurch gekennzeichnet, dass**
die Lichtleitkörper (3) einen zu ihren Lichteintrittsflächen (3a) hin sich verjüngenden Querschnitt aufweisen, und dass die Aufnahmen (4a) in Richtung zu den Lichtquellen (1) hin einen sich verjüngenden Querschnitt aufweisen, wobei sich dieser Querschnitt stärker verengt als jener der Lichtleitkörper (3).

2. Beleuchtungsvorrichtung nach Anspruch 1, **dadurch gekennzeichnet, dass** die Lichtaustrittsfläche (2b) der Vorsatzoptik (2) zur Formstabilisierung der Vorsatzoptik (2) mit einer transparenten Lichtscheibe (5) versehen ist.

3. Beleuchtungseinrichtung nach Anspruch 1 oder 2, **dadurch gekennzeichnet, dass** die Lichtaustrittsfläche (2b) der Vorsatzoptik (2) mit der transparenten Lichtscheibe (5) umspritzt ist.

4. Beleuchtungseinrichtung nach Anspruch 3, **dadurch gekennzeichnet, dass** die Lichtaustrittsfläche (2b) mit der transparenten Lichtscheibe (5) vollflächig umspritzt ist.

5. Beleuchtungseinrichtung nach einem der Ansprüche 2 bis 4, **dadurch gekennzeichnet, dass** die Lichtaustrittsfläche aus einem Kunststoff, vorzugsweise aus einem Thermoplast, insbesondere vorzugsweise aus einem temperaturbeständigen Thermoplast, insbesondere PC, gefertigt ist.

6. Beleuchtungseinrichtung nach einem der Ansprüche 1 bis 5, **dadurch gekennzeichnet, dass** der Positionshalter (4) aus einem Thermoplast, insbesondere aus einem schwarzen Thermoplast, oder aus schwarzem Kunststoff gefertigt ist.

7. Beleuchtungseinrichtung nach einem der Ansprüche 2 bis 6, **dadurch gekennzeichnet, dass** der Positionshalter (4) für jeden Lichtleitkörper (3) eine Aufnahme (4a) aufweist, in welcher der zugeordnete Lichtleitkörper (3) passgenau aufgenommen und positioniert ist, wobei beispielsweise der Positionshalter (4) die Lichtleitkörper (3) an ihren den Lichteintrittsflächen (3a) zugewandten Endbereichen aufnimmt.

8. Beleuchtungseinrichtung nach Anspruch 7, **dadurch gekennzeichnet, dass** in den Aufnahmen (4a), zwischen dem Positionshalter (4) und den Lichtleitkörpern (3) jeweils ein Material eingefügt ist, welches einen geringeren Brechungsindex als das Material der Lichtleitkörper (3) aufweist, wobei vorzugsweise das Material mit geringerem Brechungsindex den Lichtleitkörper (3) derart umgibt, dass dieser den Positionshalter (4) nicht berührt.

9. Beleuchtungseinrichtung nach einem der Ansprüche 1 bis 8, **dadurch gekennzeichnet, dass** die Lichtleitkörper (3) länglich ausgebildet sind, mit einer größeren Ausdehnung in Ausbreitungsrichtung des Lichtes als quer dazu.

10. Beleuchtungseinrichtung nach einem der Ansprüche 1 bis 9, **dadurch gekennzeichnet, dass** jede Lichtquelle jeweils eine oder mehrere Leuchtdioden umfasst.

11. Beleuchtungseinrichtung nach einem der Ansprüche 1 bis 10, **dadurch gekennzeichnet, dass** die Lichtleitkörper (3) einen zu ihren Lichteintrittsflächen (3a) hin sich verjüngenden Querschnitt aufweisen, wobei die Lichtleitkörper (3) kegelstumpfförmig oder trapezförmig ausgebildet sind.

12. Beleuchtungseinrichtung nach einem der Ansprüche 1 bis 11, **dadurch gekennzeichnet, dass** die zumindest eine Vorsatzoptik (2) aus einem transparenten, insbesondere hochtransparenten, lichtleitenden und formbaren Kunststoff gefertigt ist.

13. Beleuchtungseinrichtung nach einem der Ansprüche 1 bis 12, **dadurch gekennzeichnet, dass** die zumindest eine Vorsatzoptik (2) aus einem Silikonmaterial hergestellt ist, oder die zumindest eine Vorsatzoptik (2) aus einem Poly(organo)siloxan hergestellt ist.

14. Lichtmodul mit zumindest einer Beleuchtungseinrichtung nach einem der Ansprüche 1 bis 13.

15. Fahrzeugscheinwerfer mit zumindest einer Beleuchtungseinrichtung nach einem der Ansprüche 1 bis 13 und/oder mit zumindest einem Lichtmodul nach Anspruch 14.

## Claims

1. A lighting device (100) for a motor vehicle headlight, comprising
• a number of light sources (1),
• at least one attachment optical unit (2), having a light entrance surface (2a) and a light exit surface (2b),
• wherein the at least one attachment optical unit (2) comprises a plurality of light-guiding bodies (3), and wherein each light-guiding body (3) has a light entrance surface (3a), into which in each case at least one light source (1) feeds light,
• and wherein the light-guiding bodies (3) lead into the common light exit surface (2b),
and wherein at least one, preferably exactly one, position holder (4) is provided, by means of which the light entrance surfaces (3a) of the light-guiding bodies (3) of the at least one attachment optical unit (2) are held in position in relation to the light sources (1), and wherein the position holder (4) for each light-guiding body (3) has a receptacle (4a), in which the associated light-guiding body (3) is received and positioned with an accurate fit,
**characterised in that**
the light guiding bodies (3) have a cross-section tapering towards the light entrance surfaces (3a) thereof, and that the receptacles (4a) have a cross section tapering toward the light sources (1), wherein this cross section is narrowed to a greater extent than that of the light-guiding bodies (3).

2. The lighting device according to Claim 1, **characterised in that** the light exit surface (2b) of the attachment optical unit (2) is provided with a transparent light plate (5) for the dimensional stabilisation of the attachment optical unit (2).

3. The lighting device according to one of Claims 1 to 2, **characterised in that** the light exit surface (2b) of the attachment optical unit (2) is overmoulded with the transparent light plate (5).

4. The lighting device according to Claim 3, **characterised in that** the light exit surface (2b) is overmoulded over the entire area with the transparent light plate (5).

5. The lighting device according to one of Claims 2 to 4, **characterised in that** the light exit surface is fabricated from a plastic, preferably from a thermoplastic, particularly preferably from a temperature-resistant thermoplastic, in particular PC.

6. The lighting device according to one of Claims 1 to 5, **characterised in that** the position holder (4) is fabricated from a thermoplastic, in particular black thermoplastic, or from black plastic.

7. The lighting device according to one of Claims 2 to 6, **characterised in that** the position holder (4) has a receptacle (4a) for each light-guiding body (3), in which receptacle the associated light-guiding body (3) is received and positioned with an accurate fit, wherein preferably the position holder (4) receives the light-guiding bodies (3) at the end regions thereof facing the light entrance surfaces (3a).

8. The lighting device according to Claim 7, **characterised in that** a material is introduced into the receptacles (4a), in each case between the position holder (4) and the light-guiding bodies (3), said material having a lower refractive index than the material of the light-guiding bodies (3), wherein preferably the material with lower refractive index surrounds the light-guiding body (3) in such a way that said light-guiding body does not contact the position holder (4).

9. The lighting device according to one of Claims 1 to 8, **characterised in that** the light-guiding bodies (3) are elongate, with a greater extension in the direction of propagation of the light than transversely thereto.

10. The lighting device according to one of Claims 1 to 9, **characterised in that** each light source comprises one or more light-emitting diodes.

11. The lighting device according to one of Claims 1 to 10, **characterised in that** the light-guiding bodies (3) have a cross section tapering toward the light entrance surfaces (3a) thereof, wherein the light-guiding bodies (3) are formed in the manner of a truncated cone or in a trapezoidal manner.

12. The lighting device according to one of Claims 1 to 11, **characterised in that** at least one attachment optical unit (2) is fabricated from a transparent, in particular highly transparent, light-guiding and formable plastic.

13. The lighting device according to one of Claims 1 to 12, **characterised in that** the at least one attachment optical unit (2) is produced from a silicone material, or that the at least one attachment optical unit (2) is produced from a poly(organo)siloxane.

14. A lighting module comprising at least one lighting device according to one of Claims 1 to 13.

15. A vehicle headlight comprising at least one lighting device according to one of Claims 1 to 13 and/or comprising at least one light module according to Claim 14.

## Revendications

1. Dispositif d'éclairage (100) pour un phare de véhicule automobile, comportant :
• une pluralité de sources lumineuses (1),
• au moins une optique auxiliaire (2) ayant une surface d'entrée de lumière (2a) et une surface de sortie de lumière (2b),
• la au moins une optique auxiliaire (2) comportant plusieurs corps de guidage de lumière (3), et chaque corps de guidage de lumière (3) présentant une surface d'entrée de lumière (3a) dans laquelle à chaque fois au moins une source lumineuse (1) amène de la lumière,
• et les corps de guidage de lumière (3) débouchant dans la surface de sortie de lumière commune (2b),
et au moins un, de préférence juste un, support de positionnement (4) étant prévu, au moyen duquel les surfaces d'entrée de lumière (3a) des corps de guidage de lumière (3) de la au moins une optique auxiliaire (2) sont maintenues en position par rapport aux sources lumineuses (1), et le support de positionnement (4), pour chaque corps de guidage de lumière (3), présentant un réceptacle (4a) dans lequel le corps de guidage de lumière (3) associé est reçu et positionné de façon exactement adaptée,
**caractérisé par le fait que**
les corps de guidage de lumière (3) présentent une section transversale se rétrécissant en direction de leurs surfaces d'entrée de lumière (3a), et **par le fait que** les réceptacles (4a) présentent une section transversale se rétrécissant en direction des sources lumineuses (1), cette section transversale se rétrécissant plus fortement que chacun des corps de guidage de lumière (3).

2. Dispositif d'éclairage selon la revendication 1, **caractérisé par le fait que** la surface de sortie de lumière (2b) de l'optique auxiliaire (2) comporte une plaque lumineuse transparente (5) pour la stabilisation dimensionnelle de l'optique auxiliaire (2).

3. Dispositif d'éclairage selon l'une des revendications 1 ou 2, **caractérisé par le fait que** la surface de sortie de lumière (2b) de l'optique auxiliaire (2) est surmoulée avec la plaque lumineuse transparente (5).

4. Dispositif d'éclairage selon la revendication 3, **caractérisé par le fait que** la surface de sortie de lumière (2b) est surmoulée sur toute la surface avec la plaque lumineuse transparente (5).

5. Dispositif d'éclairage selon l'une des revendications 2 à 4, **caractérisé par le fait que** la surface de sortie de lumière est réalisée à partir d'une matière plastique, de préférence à partir d'une matière thermoplastique, en particulier, de préférence, à partir d'une matière thermoplastique résistant à la température, en particulier de PC.

6. Dispositif d'éclairage selon l'une des revendications 1 à 5, **caractérisé par le fait que** le support de positionnement (4) est réalisé à partir d'une matière thermoplastique, en particulier à partir d'une matière thermoplastique noire, ou à partir d'une matière plastique noire.

7. Dispositif d'éclairage selon l'une des revendications 2 à 6, **caractérisé par le fait que** le support de positionnement (4) présente pour chaque corps de guidage de lumière (3) un réceptacle (4a) dans lequel le corps de guidage de lumière (3) associé est reçu et positionné de façon exactement adaptée, où, par exemple, le support de positionnement (4) reçoit les corps de guidage de lumière (3) sur leurs régions d'extrémité faisant face aux surfaces d'entrée de lumière (3a).

8. Dispositif d'éclairage selon la revendication 7, **caractérisé par le fait que**, dans les réceptacles (4a), entre le support de positionnement (4) et les corps de guidage de lumière (3), dans chaque cas une matière est introduite, laquelle présente un indice de réfraction inférieur à la matière des corps de guidage de lumière (3), où, de préférence, la matière ayant un indice de réfraction inférieur entoure le corps de guidage de lumière (3) de telle sorte que celui-ci ne touche pas le support de positionnement (4).

9. Dispositif d'éclairage selon l'une des revendications 1 à 8, **caractérisé par le fait que** les corps de guidage de lumière (3) sont formés de manière allongée, avec une étendue plus grande dans la direction de la propagation de la lumière que transversalement à celle-ci.

10. Dispositif d'éclairage selon l'une des revendications 1 à 9, **caractérisé par le fait que** chaque source lumineuse comprend à chaque fois une ou plusieurs diodes électroluminescentes.

11. Dispositif d'éclairage selon l'une des revendications 1 à 10, **caractérisé par le fait que** les corps de guidage de lumière (3) présentent une section transversale se rétrécissant en direction de leurs surfaces d'entrée de lumière (3a), les corps de guidage de lumière (3) étant formés de manière tronconique ou trapézoïdale.

12. Dispositif d'éclairage selon l'une des revendications 1 à 11, **caractérisé par le fait que** la au moins une optique auxiliaire (2) est réalisée à partir d'une matière plastique transparente, en particulier hautement transparente, guidant la lumière et à laquelle on peut donner une forme.

13. Dispositif d'éclairage selon l'une des revendications 1 à 12, **caractérisé par le fait que** la au moins une optique auxiliaire (2) est fabriquée à partir d'une matière de silicone, ou la au moins une optique auxiliaire (2) est fabriquée à partir d'un poly(organo)siloxane.

14. Module d'éclairage comportant au moins un dispositif d'éclairage selon l'une des revendications 1 à 13.

15. Phare de véhicule comportant au moins un dispositif d'éclairage selon l'une des revendications 1 à 13 et/ou comportant au moins un module d'éclairage selon la revendication 14.
